# EUROPEAN PATENT APPLICATION

(11) **EP 4 468 569 A1**
(43) Date of publication of application: **27.11.2024**
(21) Application number: 23382501.7
(22) Date of filing: 26.05.2023
(51) Int. Cl.: H02K 3/24, H02K 1/14, H02K 3/18, H02K 3/52

(54) **WINDING ASSEMBLIES AND RELATED METHODS**

(71) Applicant: General Electric Renovables España S.L., 08005 Barcelona (ES)
(72) Inventor: MUÑIZ CASAIS, Cesar, 08005 Barcelona (ES); URRESTY, Julio Cesar, 08005 Barcelona (ES)
(74) Representative: Bardehle Pagenberg S.L.

(57) **Abstract**

The present disclosure is related to winding assemblies for an electrical machine. The winding assembly includes a plurality of winding bodies having insulated strands. The plurality of winding bodies includes a first winding body configured to be mounted around a base of the stator tooth, and a second winding body configured to be mounted closer to a distal end of the stator tooth. Further, the first and second winding bodies are electrically connected. Stator segments, and pole shoes comprising such winding assemblies are also provided. Methods for mounting a winding assembly to a stator tooth are also provided.

## Description

### FIELD

The present disclosure relates to winding assemblies, and to pole shoes comprising such winding assemblies. The present disclosure further relates to electrical machines e.g. generators comprising such winding assemblies or pole shoes. And the present disclosure further relates to wind turbines comprising such a generator. The present disclosure also relates to methods for mounting winding assemblies to a stator tooth of an electrical machine.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

Wind turbine generators, and other electrical machines such as motors, generally comprise a rotor and a stator. Rotor and stator can be concentrically mounted with a radial air gap between them. The rotor rotates with respect to the stator. The rotor may form an inner structure and the stator the outer structure. The stator therefore may radially surround the rotor. Alternatively, in other configurations the arrangement may be opposite, with the rotor radially surrounding the stator.

Large electrical generators, as in modern wind turbines, may be permanent magnet excited generators (PMG) or electrically excited generators. In permanent magnet generators, permanent magnets (PM) are generally arranged on the rotor, whereas winding elements, i.e., coils, are usually included in the stator. Permanent magnet generators are generally reliable and require less maintenance than other type of generators and are therefore often deemed suitable for offshore wind turbines.

A permanent magnet generator may comprise a stator yoke with a plurality of teeth protruding in a radial direction. The teeth may protrude towards a center of the stator yoke in generators where the stator surrounds the generator rotor. Alternatively, in generators where the generator rotor surrounds the stator, the teeth may protrude in a radial direction towards the outside of the stator yoke. Further, a plurality of slots may be defined between adjacent teeth, wherein each slot may house a respective winding, or several parts of different windings.

On the other hand, electrically excited generators generally comprise a rotor having a plurality of pole shoes and excitation windings, i.e., coils. In use, a current is applied to the excitation coils. The applied current creates the polarity of the poles, wherein adjacent poles have a different magnetic polarity. As the rotor turns, the magnetic field from the pole shoes reaches the windings of the stator and causes a variable magnetic flux in the stator windings to produce a voltage in the stator windings.

Windings are typically made of insulated copper wire and are wound around the teeth to produce the necessary electromagnetic fields. One of the main issues associated with windings in large electric machines is overheating. As current flows through the copper wire in the windings, it generates heat, which can build up and can cause the insulation to degrade and/or overall performance of the electrical machine to diminish. Overheating can result from a number of factors, including high current density, inadequate cooling, or poor quality insulation. Further, overheating can lead to insulation breakdown, which can result in short circuits and severe damage to the machine.

Another issue associated with windings is insulation failure. The insulation on the copper wire is essential for preventing short circuits and other electrical problems. However, insulating windings effectively implies that the insulating material has to be firmly secured around the winding surface. This results in the insulating material, e.g. insulation tape, being subjected to high loads e.g. at the corners of the winding. This excessive mechanical stress may promote insulation degradation over time. Insulation failure can also result in severe damage to the machine.

Such potential issues can be aggravated with increasing size of the electrical machines. As size of the electrical machines increase, so may the size of the stator teeth and the corresponding windings. For example, large size electrical machines, more particularly generators are known from direct drive wind turbines, and particularly direct drive wind turbines with a nominal power of 10 MW or more. Such direct drive generators may have a diameter of e.g. 6-8 meters or even more, and a length of 1 - 2 meters or even more. Large size electrical machines are also known in other technical fields, such as e.g. hydropower installations.

The present disclosure aims to provides winding assemblies and associated methods which are also suitable for large or very large size electrical machines, and which at least partially overcome some of the aforementioned drawbacks.

### SUMMARY

In an aspect of the present disclosure, a winding assembly for a stator tooth of an electrical machine is provided, the stator tooth extending from a base to a distal end in a radial direction. The winding assembly comprises a first winding body configured to be mounted around a section of the stator tooth that is near the base of the stator tooth, and comprising a plurality of first insulated strands wound around the stator tooth. The winding assembly further comprises a second winding body configured to be mounted closer to the distal end of the stator tooth than the first winding body and comprising a plurality of second insulated strands wound around the stator tooth. The second winding body is separated from the first winding body.

Having a plurality of winding bodies simplifies the insulation of the assembly, e.g. each winding body may have an independent insulation, and therefore the insulation material may be subjected to less severe tension loads due to the reduced height of the body. Also, in some examples, the first and second winding bodies may be optimized for different purposes as will be explained herein. Additionally, the temperature of the winding assembly disclosed may be controlled in a more efficient manner due to an increase in exterior surface area to volume ratio compared with single body winding. The physical separation of the winding bodies allows for additional cooling which will be explained hereinafter.

In a further aspect of the present disclosure, a stator segment is provided, comprising one or more stator teeth extending from a base to a distal end in a radial direction. The stator segment further comprising a winding assembly according to examples of the previous aspect.

In yet a further aspect, an electrical machine is provided. The electrical machine comprises a rotor which is rotatable about a machine axis; and a stator which is concentric with respect to the rotor. And the stator comprises a plurality of pole shoes according to the previous aspect.

Also, a wind turbine comprising such an electrical machine is provided in a further aspect.

In yet a further aspect, a method for mounting a winding assembly to a stator tooth is provided, the stator tooth extending from a base to a distal end in a radial direction. The method comprises providing a first winding body by winding a plurality of first insulated strands around a section of the stator tooth that is near the base of the stator tooth and providing a second winding body by winding a plurality of second insulated strands around a section of the stator tooth that is closer to the distal end of the stator tooth. The method further comprises electrically connecting the first winding body to the second winding body.

In yet a further aspect, a pole shoe for a stator of an electrical machine is provided. The pole shoe comprises a stator tooth extending from a base to a distal end in a radial direction, and wherein the base of the pole shoe is shaped such as to fit in a mating structure on the stator. The pole shoe further comprises a first winding body comprising a plurality of first insulated strands wound around a section of the stator tooth that is near the base of the stator tooth, and a second winding body comprising a plurality of second insulated strands wound around the stator tooth closer to the distal end of the stator tooth than the first winding body. The second winding body is separated from the first winding body, and the first winding body is electrically connected to the second winding body.

Throughout the present disclosure, the term "strand" may refer to both a wire, or cable, with a circular or rounded cross-section as well as to a plate like material with e.g. a rectangular, square or other cross-section. The plate like material may herein have a certain thickness and may be regarded e.g. as a strip or bar.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a perspective view of one example of a wind turbine;
Figure 2 illustrates an example of a hub and a nacelle of a wind turbine;
Figure 3 schematically illustrates a perspective view of one example of a winding assembly according to the present disclosure mounted to a stator tooth;
Figure 4 schematically illustrates a cross-section across the plane A-A' of figure 3;
Figure 5 schematically illustrates a cross-section of another example of a winding assembly; and
Figure 6 shows a flowchart of an example of a method for mounting a wind assembly to a stator tooth according to the present disclosure;

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope or spirit of the teaching. For instance, features illustrated or described as part of one embodiment can be used with another embodiment to yield a still further embodiment. Thus, it is intended that the present disclosure covers such modifications and variations as come within the scope of the appended claims and their equivalents.

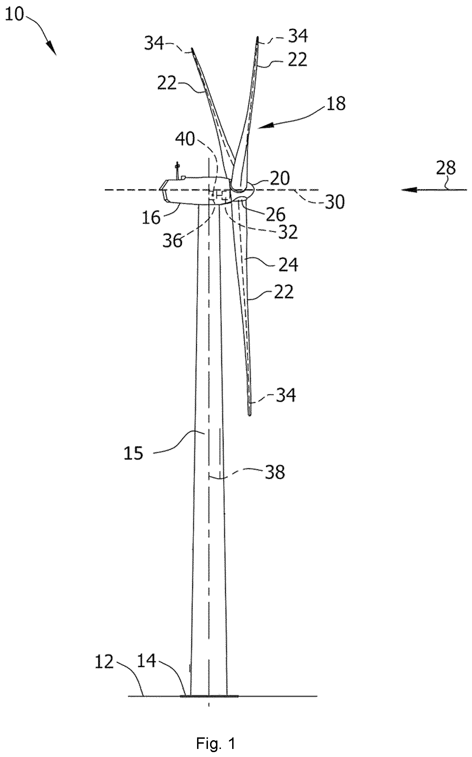

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

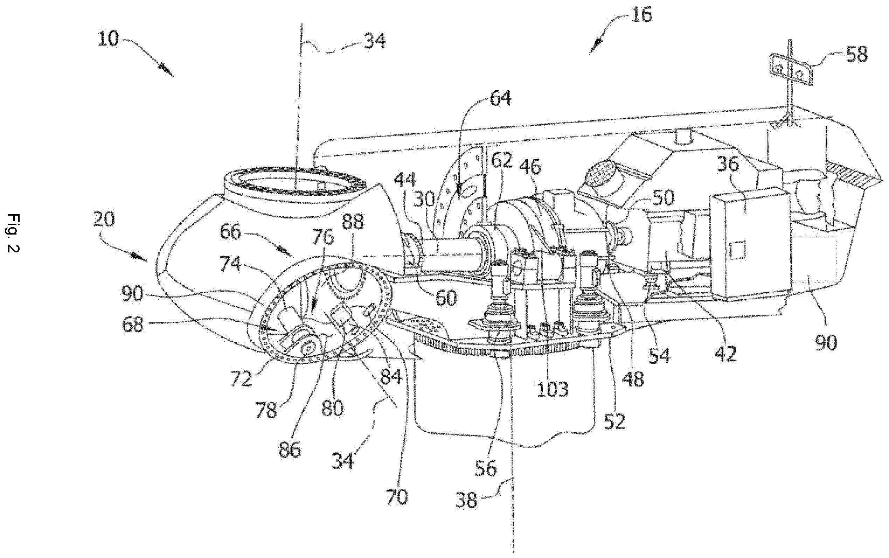

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage (10 - 35 KV). Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system 58 which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer roof surface of hub 20 and may be coupled, directly or indirectly, to the outer roof surface.

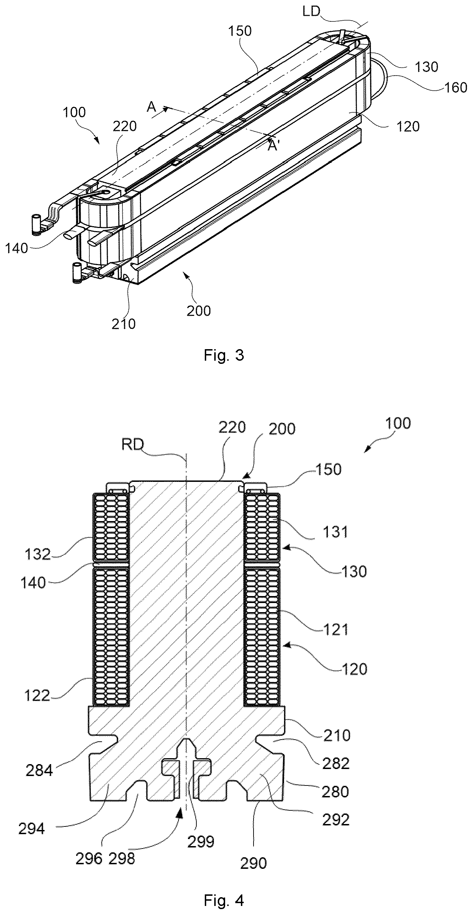

Figure 3 schematically illustrates a winding assembly 100 according to an example the present disclosure. More precisely, the winding assembly 100 in figure 3 is illustrated in a mounted configuration, i.e. the winding assembly 100 is mounted to a stator tooth 200 of an electrical machine.

The stator tooth 200 in figure 3 extends from a base 210 to a distal end 220 in a radial direction RD. Further, the stator tooth 200 also extends along a longitudinal direction LD, substantially perpendicular to the radial direction RD. The longitudinal direction LD may extend in an axial direction and be parallel to an axis of rotation of the electrical machine.

The stator tooth 200 may be attached to a remainder of the stator structure, e.g. a stator yoke through the bases 210 of each corresponding tooth. The distal end 220 of the tooth is arranged at a side of the air gap between the stator and rotor.

The winding assembly 100 comprises a plurality of winding bodies 120, 130 comprising insulated strands 121, 131. Further, the plurality of winding bodies 120, 130 include a first winding body 120 configured to be mounted around a section of the stator tooth 200 that is near the base 21, and a second winding body 130 configured to be mounted closer to the distal end 220 of the stator tooth 200 than the first winding body 120. Additionally, the first and second winding bodies 120, 130 are electrically connected. In the example in figure 3, the first and second winding bodies 120, 130 are electrically connected through a connector 160.

The winding assembly 100 provided allows using winding bodies with lower height-to-width ratio than when a single winding body is used. E.g. the height-to-width ratio may be below 5 and more specifically below 3 for one or more of the winding bodies, so that insulation failure may be reduced. Thus, the winding assembly provided allows reducing the tension applied on the insulation material 122, 132 to secure it around the winding bodies 120, 130. This, at the same time, increases the resin content of the insulation around the corner the corners of the winding bodies 120, 130.

As further illustrated in figure 3, the winding assembly 100 may further comprise a cooling channel 140 between the first and second winding bodies 120, 130. The cooling channel 140 may convey a liquid or gas coolant.

In some examples, like in the example of figure 4, the first winding body 120 may have a greater height than the second winding body 130. Thus, most of the lateral surfaces of the stator tooth lateral surfaces may be surrounded by the first winding body 120, whereas the second winding body 130 may only occupy a relatively small portion of the lateral surfaces. In some examples, the first winding body 120 may have a height of at least 150% of a height of the second winding body, and more specifically the height of the first winding body may be 150-200% of the height of the second winding body.

Although not illustrated in figure 3, the winding assembly 100 may comprise a third winding body electrically connected to the first and second winding bodies 120, 130. The third winding body may be configured to be mounted closer to the distal end 220 of the stator tooth 200 than the second winding body 130. In the examples where more than two winding bodies are provided, additional cooling channels or circuits may be provided between respective additional winding bodies. In examples, the cooling channel between winding bodies may have different cooling characteristics depending on the winding bodies between which they are fitted. For example, a cooling channel 140 between the first and second winding body 120, 130 may be configured to convey a liquid coolant and a cooling circuit between the second and third winding body may be configured to convey a cooling gas, e.g. air. In further examples, cooling channels may be configured to convey the same fluid, and may have the same or different cooling flow rates.

Figure 4 schematically illustrates a cross-section across the plane A-A' in figure 3. Note that the cross-sections of the strands 121, 131 have not been illustrated with section lines for simplicity.

From figure 4, it becomes clear that a pole shoe may be provided as a separate unit which can be mounted to a stator structure. A pole shoe for a stator of an electrical machine may comprise a stator tooth and a winding assembly comprising multiple winding bodies according to any of the examples herein disclosed.

In a specific aspect, the present disclosure provided a pole shore, wherein the pole shoe comprises a stator tooth 200 extending from a base 210 to a distal end 220 in a radial direction. The base 210 of the pole shoe is shaped such as to fit in a mating structure on the stator.

The pole shoe further comprises a first winding body 120 comprising a plurality of first insulated strands 121 wound around a section of the stator tooth 200 that is near the base 210 of the stator tooth 200, and a second winding body 130 comprising a plurality of second insulated strands 131 wound around the stator tooth closer to the distal end of the stator tooth than the first winding body and. The second winding body 130 is separated from the first winding body 120, and the first winding body 120 is electrically connected to the second winding body 130.

As illustrated in figure 4, each winding body 120, 130 may have a plurality of insulated strands 121, 131. Further, each winding body 120, 130 may have an insulation element 122, 132 independent from each other. The loads acting on the insulation element 122, 132 (e.g. insulation tape) may increase with the height of the winding body. Therefore, having a winding assembly 100 comprising a plurality of winding bodies 120, 130 configured to be individually insulated, reduces the likelihood of insulation degradation and associated issues.

Figure 4 also illustrates that the first and second winding bodies 120, 130 may be separated by a cooling channel 140. In the present example, a cooling fluid may pass through the cooling channel 140. The coolant may be a liquid or a gas, and may be e.g. air cooling delivered to the air gap, or may be branched off from cooling air supplied to the air gap. The cooling channel may include, baffles, or structures that promote turbulence and have a serpentine configuration or others. The details of the cooling system 140 have not been illustrated in figure 4 for simplicity.

Although the cross-section in figure 4 illustrates an example of winding assembly 100 comprising two winding bodies 120, 130 electrically connected, the winding assembly 100 could comprise more than two winding bodies. For example, the winding assembly 100 could comprise three or four winding bodies electrically connected. In addition, some (or all) pairs of adjacent winding bodies may be separated by additional cooling circuits or by additional and independent cooling systems.

As may be seen in figure 4, the pole shoe or the winding assembly 100 may further include one or more winding stoppers 150 (or other winding retention elements) that are connected to a lateral wall of the stator tooth 200 and hold the winding assembly 100 in place. The winding stoppers 150 may be located at or near the distal end 220 of the stator tooth 200 or at an intermediate location, i.e. between the first and second winding bodies 120, 130. Further, the winding stoppers 150 may comprise several components such as a retention element, an elastic member, a wedge type element and others. Thus, in some examples, the winding stoppers 150 may have some components at (or close to) a distal end 220 of the stator tooth 200 and other components between winding bodies 120, 130. For example, a retention element of the winding stopper 150 may be located at (or close to) a distal end 220 of the stator tooth 200, and an elastic element such as a ripple spring or a wedge may be located between the first and second winding bodies 120, 130; or between the first and second winding bodies 120, 130 and the cooling system 140. Other configurations of winding retention elements may be included in the winding assembly 100 disclosed.

The base 210 of the pole shoe in this example is shaped such as to fit in a mating structure on the stator, in particular a stator rim or stator yoke. More particularly, the base 210 in this example comprises recesses 282, 284 in sidewalls 280 at each side of the base. A corresponding male structure may be provided on the mating structure of the stator, e.g. on the stator yoke. The male structure of the stator yoke can reach into recesses 282, 284 and retain the base 210. In examples, the pole shoe may be axially slid onto the stator yoke in this manner.

In some other examples, the recesses 282, 284 may be used as cooling channels, i.e., air may be passed through these channels in order to control or lower the temperature of the stator tooth.

The base 210 of the pole shoe may further comprise recesses 296 in a bottom surface 290 of the base. The base may comprise a central hole at the bottom surface 290, and the central hole 298 splits the base 210 into two parts, 292 and 294.The central hole 298 may accommodate a nut 299. Bolts, or similar fasteners may be used to engage with nut 299 and thereby mount the base 210 securely to a stator yoke.

Rather than a pole shoe with a single stator tooth, which can be mounted as a unit to a stator structure, in yet another example, a stator segment comprising multiple stator teeth may be used. A stator segment may herein be regarded as an assembly comprising one or more stator teeth (a stator segment thus also covers the pole shoe). A plurality of teeth of the stator segment, or each of the teeth of the stator segment may comprise a winding assembly according to the examples herein disclosed.

The stator segment may be mounted to a remaining stator structure as a unit. The base of the stator structure may be shaped (similarly as illustrated for the pole shoe), such as to fit in a mating structure of the stator. Multiple features (protrusions or recesses) may be incorporated in the base of the stator segment suitable for mating with corresponding features on the remaining stator structure, in particular a stator rim or stator yoke.

In further examples, the first and second winding assemblies (arranged around a stator tooth, possibly belonging to a stator shoe, or belonging to a stator segment) do not need to be electrically connected to each other. In some examples, a first winding assembly arranged around a first tooth may be connected to a second winding assembly of a second tooth. The first and second winding assemblies arranged individual teeth may be connected in parallel rather than in series in these examples. In the case of stator segments, the first and second teeth may form part of the same stator segment.

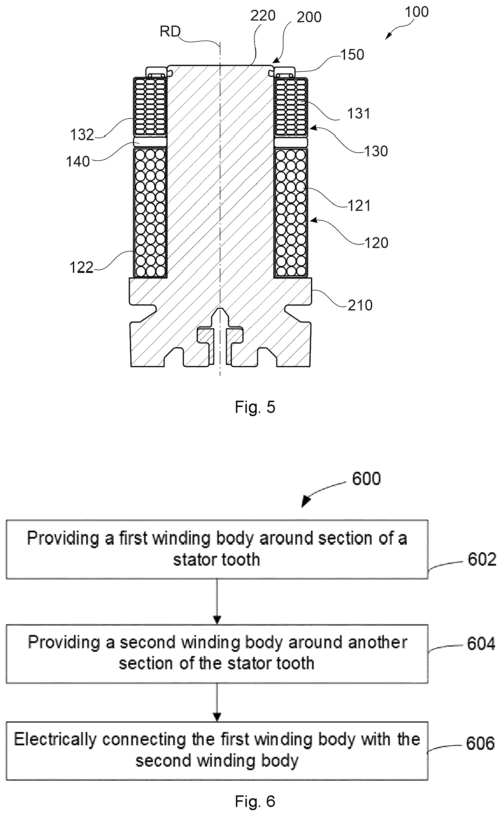

Figure 5 schematically illustrates a cross-section of another example of winding assembly and of a pole shoe for a stator of an electrical machine. In the example in figure 5, the winding assembly 100 comprises a plurality of winding bodies 120, 130 made of insulated strands 121, 131. Further, the plurality of winding bodies 120, 130 include a first winding body 120 configured to be mounted around a base 210 of the stator tooth 200, and a second winding 130 body configured to be mounted in a location closer to the distal end 220 of the stator tooth 200 than the first winding body 120. Additionally, the strands of the first and second winding bodies 121, 131 are different.

In the example in figure 5, the first winding body 120 comprises strands 121 with a cross-sectional area that is greater than a cross-section area of the strands 131 of the second winding body 130. More precisely, the cross-section area of the strands 121 of the first winding body 120 at least 50% greater than the cross-sectional area of the second strands. Note that the cross-sectional area ratio between strands from the first and second winding bodies shown in figure 5 has been chosen for illustrative purposes only. It is also noted that the strands 121 are indicated as wires with a circular cross-sectional area, but as mentioned elsewhere, the strands may also have a substantially rectangular or other cross-section.

A winding assembly 100 comprising a plurality of winding bodies 120, 130 may be configured such that the eddy current losses, and/or other losses are at least partially reduced.

Eddy currents may be understood as loops of electric current induced within conductors by a changing magnetic field or by the relative motion of a conductor in a magnetic field. Eddy currents flow in closed loops within conductors, in planes perpendicular to the magnetic field. The magnitude of the current in a given loop is proportional to the strength of the magnetic field, the area of the loop, and the rate of change of flux; and is inversely proportional to the resistivity of the material. The rate of change of magnetic flux is not constant along the height of the tooth and is higher near the distal end of the tooth. In order to reduce the eddy currents near the distal end of the tooth, the second wind assembly (or a third or fourth one if present) may have strands with a reduced cross-section.

Currents flowing through the conductor also dissipate energy as heat in the material. The reduced cross-section leads to increased current density and more heat generation. However, it has been found that near the distal end of the tooth, the predominant factor for losses is the creation of eddy currents. *Vice versa,* near the base of the tooth, the predominant factor for losses is the current density, so that an increased cross-section there can maintain overall losses under control. As compared to prior art systems, the overall losses may be reduced and overall heat distribution may be more constant.

In some examples, the strands from the different winding assemblies may be made from different materials, and thus different resistivities.

Figure 6 is a flowchart of an example method 600 for mounting a winding assembly to a stator tooth 200 of an electrical machine.

As shown in figure 6, method 600 includes providing a first winding body 120 around a section of the tooth that is close to the base 210 of the stator tooth 200 (block 602). Method 600 further includes providing a second winding body 130 around a section of the tooth that is closer to the distal end 220 of the stator tooth 200 than the first winding body 120 (block 604). The first and second winding bodies 120, 130 may include insulated strands 121, 131. The method 600 further includes, at block 606, electrically coupling the first winding body 120 to the second winding body 130.

In some examples, the individual winding bodies may be wrapped in insulation material, e.g. insulation tape.

The method 600 may include additional implementations, such as any single implementation or any combination of implementations described below and/or in connection with the winding assembly 100 described elsewhere herein. In a first implementation, a cross-sectional area of the strands of the first winding body 121 may be greater than a cross-sectional area of the strands of the second winding body 131.

In some examples of method 600, electrically coupling the winding bodies 120, 130 may include welding or brazing a connector 160 to the first and second winding bodies 120, 130.

In another implementation, alone or in combination with one or more of the previous implementations, the method 600 further may include providing a cooling system 140 between the first and second winding bodies 120, 130.

In further implementations, alone or in combination with one or more of the previous implementations, providing the first winding body 120, the second winding body 130 and the cooling system 140 to a stator tooth 200 may be performed in a single step.

Although figure 6 shows example blocks of method 600, in some implementations, method 600 may include additional blocks, fewer blocks, different blocks, or differently arranged blocks than those depicted in figure 6. Additionally, or alternatively, two or more of the blocks of method 600 may be performed in parallel.

It is noted that all features of the winding assembly can be included in methods for mounting winding assemblies in stator teeth, and *vice versa.*

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A winding assembly (100) for a stator tooth (200) of an electrical machine, the stator tooth (200) extending from a base (210) to a distal end (220) in a radial direction, the winding assembly (100) comprising:
a first winding body (120) configured to be mounted around a section of the stator tooth (200) that is near the base (210) of the stator tooth, and comprising a plurality of first insulated strands (121) wound around the stator tooth, and
a second winding body (120) configured to be mounted closer to the distal end (220) of the stator tooth (200) than the first winding body (120) and comprising a plurality of second insulated strands (131) wound around the stator tooth (200); and wherein
the second winding body (130) is separated from the first winding body (120).

2. The winding assembly (100) according to claim 1, wherein the first winding body (120) is electrically connected to the second winding body (130).

3. The winding assembly according to claim 1 or 2, wherein a cross-sectional area of the first strands (121) is greater than a cross-sectional area of the second strands (131).

4. The winding assembly according to claim 3, wherein the cross-sectional area of the first strands (121) is at least 50% greater than the cross-sectional area of the second strands (131).

5. The winding assembly according to any of claims 1 - 4, further comprising a cooling channel (140) between the first and the second winding bodies.

6. The winding assembly according to claim 5, wherein the cooling channel (140) is configured to convey a liquid coolant.

7. The winding assembly according to any one of claims 1-6, wherein the first winding body (120) has a height that is equal to or greater than the second winding body (130).

8. The winding assembly according to claim 7, wherein the first winding body (120) has a height of at least 150% of a height of the second winding body (130), and specifically wherein the height of the first winding body is 150% and 200% of the height of the second winding body (130).

9. The winding assembly according to any one of claims 1 - 8, wherein the winding assembly comprises a third winding body that is electrically connected to the second winding body, and comprises a plurality of third insulated strands wound around the tooth, and configured to be mounted closer to the distal end of the stator tooth than the second winding body, and optionally wherein the cross-section area of the strands of the third winding body is smaller than the cross-section area of the strands of the second winding body, and otpionally further comprising an additional cooling circuit between the second and third winding bodies.

10. A stator segment comprising one or more stator teeth extending from a base to a distal end in a radial direction, and further comprising a winding assembly according to any of claims 1-9 around each of the stator teeth.

11. The stator segment according to claim 10, wherein the base of the stator segment is shaped to be fit in a mating structure of the stator.

12. The stator segment according to claim 10 or 11, wherein the stator segment is a pole shoe comprising a single stator tooth.

13. An electrical machine comprising:
a rotor rotatable about a machine axis; and
a stator which is concentric with respect to the rotor, the stator comprising one or more stator segment according to any of claims 10 - 12.

14. A wind turbine comprising the electrical machine according to claim 13.

15. A method for mounting a winding assembly according to any of claims 1 - 9 to a stator tooth, the stator tooth extending from a base to a distal end in a radial direction, the method comprising:
providing a first winding body by winding a plurality of first insulated strands around a section of the stator tooth that is near the base of the stator tooth; and
providing a second winding body by winding a plurality of second insulated strands around a section of the stator tooth that is closer to the distal end of the stator tooth; and
electrically connecting the first winding body to the second winding body.
